Europäisches Patentamt

European Patent Office

Office européen des brevets

(11) Publication number: **0 359 487**
**A2**

## (12) EUROPEAN PATENT APPLICATION

(21) Application number: **89309144.7**

(22) Date of filing: **08.09.89**

(51) Int. Cl.⁵: **A22C 29/00 , A23L 1/325**

(30) Priority: **12.09.88 JP 228166/88**

(43) Date of publication of application:
**21.03.90 Bulletin 90/12**

(84) Designated Contracting States:
**DE FR GB**

(71) Applicant: **KABUSHIKI KAISHA IKEUCHI TEKKOSHO**
**1-9-9 Tamachi**
**Akashi 673(JP)**

(72) Inventor: **Ikeuchi, Hiroji**
**9-17, Tamachi, 1-chome**
**Akashi 673(JP)**
Inventor: **Ikeuchi, Kiyoaki**
**9-17, Tamachi, 1-chome**
**Akashi 673(JP)**

(74) Representative: **West, Alan Harry et al**
**R.G.C. Jenkins & Co. 26 Caxton Street**
**London SW1H 0RJ(GB)**

(54) **Shrimp-shaped food product.**

(57) A shrimp-shaped processed food product is produced in a two-piece split mold (1) having a cavity (2) in the shape of the shelled meat of the torso of a shrimp and a substantially flat surface (1') around the cavity (2), and a cover mold (6). The split mold has a protrusion (5) including a flat surface (5') on substantially the same plane as the flat surface (1'), the flat surface (5') being above the cavity at the neck side of the shrimp torso. The two halves (1a, 1b) of the two-piece split mold form an approximately circular raw material inlet (4), a curved opening (3) being formed separately from the raw material inlet, and the cover mold (6) having a curved surface (7) capable of sealing off the curved opening. The cover mold (6) suitably includes an arcuate protrusion which is adjacent the curved opening for forming a groove in a short portion only of the back of the shrimp torso.

# SHRIMP-SHAPED FOOD PRODUCT

This invention relates to a shrimp-shaped processed food product of which ground fish meat is the main ingredient, and more specifically to an apparatus and a method for the production of such a shrimp-shaped processed food product.

There is known in the prior art a shrimp-shaped processed food product of which ground fish meat is used as the main ingredient. A raw material comprising this main ingredient to which are added a shrimp flavor and a caking agent is injected into a shrimp-shaped cavity, heated, and solidified. A method for the production of such a shrimp-shaped processed food product having a shape closely resembling that of a real shrimp is disclosed in European patent Publication No. 0 290 173 AI dated November 9, 1988. U.S. patent No. 4,748,039 also shows food products, apparatus and process of this nature.

An intestinal vein or intestine runs along the torso of a shrimp from the neck to the tail, and this vein is usually removed in a procedure called deveining (removal of the undesirable vein). Because a slit is made along the back of the torso of the shrimp in order to remove this vein, after the vein is removed a groove remains, and when the shrimp is cooked, the meat of the shrimp swells up and protrudes on both sides of this groove. The above-mentioned U.S. application and U.S. patent show an arrangement for forming a groove which simulates the deveining groove. In recent years, however, it has been considered undesirable to have this swelling of the meat along the entire length of the torso of the shrimp. For this reason, during the deveining procedure, the vein is removed by making a slit in only a part of the back of the torso. With the method of making a processed food product as described in the patent disclosure mentioned above, however, because a continuous groove is formed along the back of the torso of the shrimp from the neck to the tail, it is not possible to respond to the recent preferences of the consumers.

In consideration of the problem described above, the purpose of this invention is to provide a shrimp-shaped processed food product which is capable of sufficiently meeting the current demand and which has a deveined part closely resembling that of a real shrimp, and an apparatus and a method for the production of such a shrimp-shaped processed food product.

The invention comprises a processed food product formed in the shape of a shrimp. A raw material using ground fish meat as the main ingredient and having a taste and texture resembling that of shrimp is injected into a mold, heated and solidified. The shrimp-shaped processed food product has a continuous groove along a part of the back of the torso of the shrimp and enlarged parts on both sides of that groove.

The invention further comprises an apparatus for the production of a shrimp-shaped processed food product, comprising a two-piece split mold which has a cavity formed in the shape of the shelled meat of the torso of a shrimp and a flat surface, and a cover mold. The split mold has a protrusion having a flat surface in the same plane as the flat surface of the mold formed on it above the cavity at the neck side of the shrimp torso; an approximately circular raw material inlet is formed by fitting together the two halves of the two-piece split mold; a curved opening is formed on the other side of a sealed part from the raw material inlet; and the cover mold has a curved surface capable of sealing off the opening.

The invention still further comprises a method for the production of a shrimp-shaped processed food product, utilizing a two-piece split mold, a cover mold, a raw material supply mold, and a compression tool. The two-piece split mold has a cavity formed in the shape of the shelled meat of the torso of a shrimp and a flat surface; a protrusion having a flat surface on the same plane as the flat surface of the mold is formed on the mold above the cavity at the neck side of the shrimp torso; an approximately circular raw material inlet is formed in the mold by fitting together the two halves of the two-piece split mold; and a curved opening is formed in the mold on the other side of a sealed part from the raw material inlet. The cover mold has a curved surface capable of sealing off the opening in the two-piece split mold, the raw material supply mold has a raw material supply channel matching the raw material inlet, and the compression tool has a protrusion with a wedge-shaped cross section. In accordance with the method, first a mold release agent and then a food coloring agent are sprayed in through the opening in the two-piece split mold; the cover mold is lowered to seal off the opening in the two-piece split mold; the raw material supply channel of the raw material supply mold is aligned with the raw material inlet of the two-piece split mold; a raw material using ground fish meat as the main ingredient and having a taste and texture resembling that of shrimp is injected into the cavity; the cover mold and raw material supply mold are pulled away after the cavity has been filled with the raw material; the compression tool is pressed down onto the injected raw material to form a groove in the top of the raw material in the opening of the two-piece split mold; and then the mold is heated in the next step in order to preserve the shape of the raw material.

The following detailed description of the embodiments of this invention is given with reference to the figures of the attached drawings, wherein:

Fig. 1 is an exploded sectional view of a set of molds in accordance with this invention;

Fig. 2 is a plan view of two halves of the two-piece split mold;

Fig. 3a is a side view of a compression tool for use with the split mold;

Fig. 3b is a side view of the two-piece split mold;

Fig. 3c is a sectional view taken along the line 3c-3c of Fig. 3a;

Fig. 4a through 4e are sectional views illustrating steps in the method of making a food product according to this invention;

Fig. 5 is a perspective view of a shrimp-shaped processed food product according to this invention;

Fig. 6 is an exploded perspective view showing another embodiment of the invention; and

Fig. 7 is an exploded perspective view showing yet another embodiment of the invention.

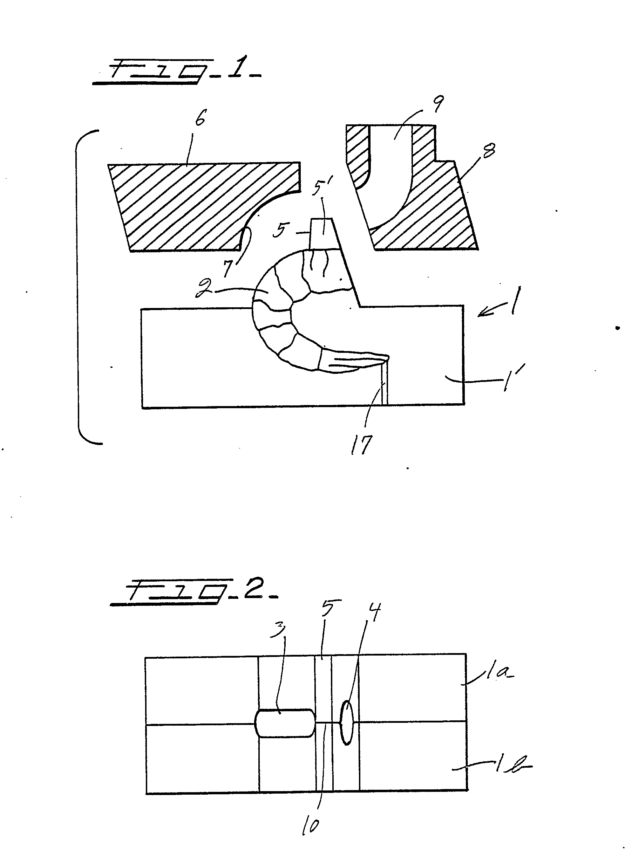

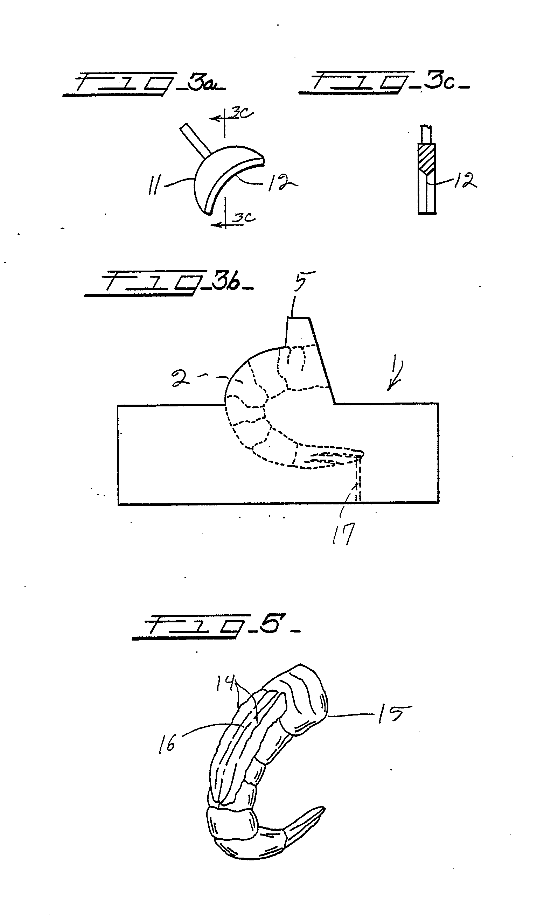

In Fig. 1, the inner mating surface of half of a split mold 1 is shown. A cavity 2 is formed in the shape of the shelled meat of the torso of a shrimp. With the exception of the concave parts formed by the cavity, the surfaces of the mold 10 are composed of a flat, even surface 1'. As shown in Fig. 2, the split mold 1 includes two halves 1a and 1b which are essentially mirror images.

An opening 3 is formed in the split mold such that it curves in a circular arc approximating the shape of the back of a shrimp. A raw material inlet 4 corresponds to the neck end of the shrimp torso, and above the cavity 2 between this raw material inlet 4 and the opening 3 there is a protrusion 5. This protrusion 5 has a flat surface 5' in the same plane as the flat surfaces 1' of the mold halves 1 and 1a.

The mold further includes a cover mold 6 which has a curved surface 7 capable of sealing off the opening 3 of the two-piece split mold 1, and it can be freely mounted and removed vertically. For the material of the cover mold, a material which has elasticity, such as urethane, for example, is preferred so that the cover mold can be mounted tightly in accordance with the shape of the opening 3.

A raw material supply mold 8 having a raw material supply channel 9 is capable of supplying the raw material into the cavity 2 by being positioned closely to the top of the mold 1 so that the raw material supply channel 9 is aligned with the raw material inlet 4. By aligning together the flat surfaces 5' of the two halves of the two-piece split mold, a sealed part 10 is formed between the raw material inlet 4 and the opening 3. The part 8 may be made of the same material as the part 6.

The two parts 6 and 8 extend across the joint between the two halves 1a and 1b and, of course, they enclose the openings 3 and 4 during use.

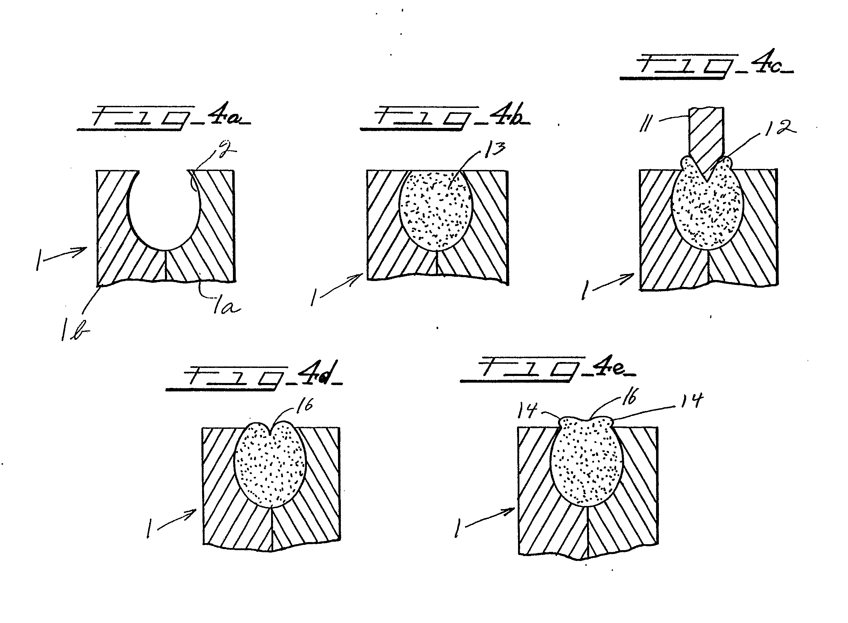

Fig. 3a is a side view showing a compression tool 11, Fig. 3b is a side view of the two-piece split mold 1 in the closed condition, and Fig. 3c is a cross-sectional view along line 3c-3c in Fig. 3a.

Fig. 3a shows that the tool 11 has an arcuate quarter-moon shape. The inner face has approximately the curve of the back of a shrimp and the opening 3. As shown in Fig. 3c, the bottom face of the compression tool 11 has a V-shaped protrusion 12 formed so that it has a wedge-shaped cross section, and this protrusion 12 is formed so as to match the shape of the opening 3. Aluminum or some other metal is preferred for use as the material of this compression tool. Although not shown in the drawings, this compression tool 11 is designed to allow for moistening of the wedge-shaped protrusion 12 with water so that, when the protrusion 12 presses down on the raw material, the raw material will not stick to it.

The following is a description of the method used for the production of the shrimp-shaped processed food product utilizing the above described parts. The method comprises the steps of:

(1) Spraying of a mold release agent and a food coloring agent

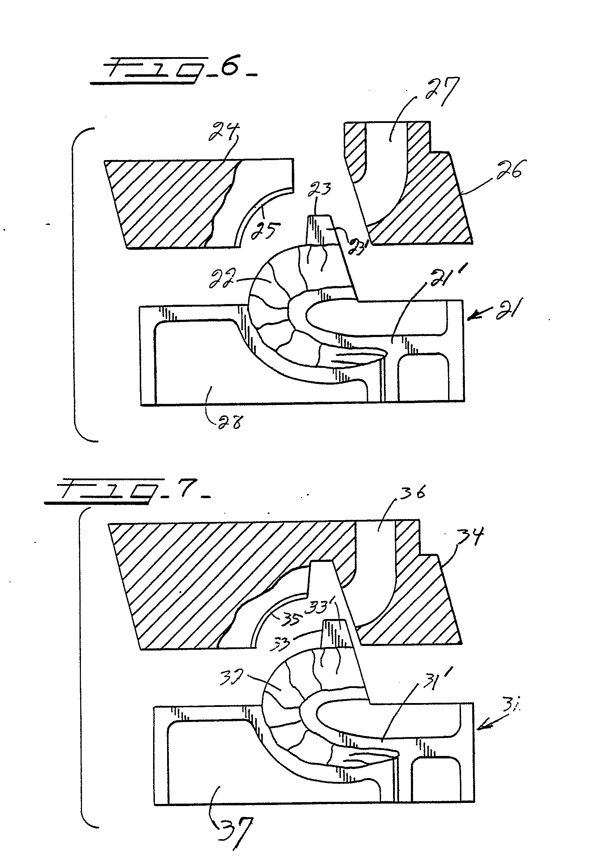

The two halves 1a and 1b of the mold 1 are fitted together as shown in Figs. 2 and 4a. First a mold release agent and then a food coloring agent are sprayed in through the opening 3. Conventional release and coloring agents may be used and are well known to those skilled in this art.

(2) Supply of the raw material

Next, the opening 3 (Fig. 2) is sealed off by the cover mold 6, and the mold 8 is positioned against the mold halves 1a and 1b. The raw material including ground fish meat as the main ingredient and having a taste and texture resembling that of shrimp is injected from the raw material supply channel 9 through the raw material inlet 4 and into the cavity 2. The composition of the raw material is conventional and well known to those skilled in this art. An air vent hole 17 releases air from the cavity. After the raw material is injected, the raw material supply mold 8 and the cover mold 6 are pulled away from the mold 1.

### (3) Formation of the back groove

Next, the compression tool 11 is lowered over the opening 3 so that the wedge-shaped protrusion 12 forms an arcuate groove 16 in a part of the back of the raw material.

### (4) Heating

The product is heated together with the mold 1, and with or without the compression tool 11 having been first pulled away.

### (5) Separation of the mold halves and removal of the product

After heating for a desired length of time has been completed, the two halves 1a and 1b of the mold 1 are separated and the product is removed. If the compression tool 11 has been heated together with the mold 1, the compression tool 11 is first pulled away from the mold 1, and then the two halves of the mold 1 are separated and the product is removed.

Figs. 4a through 4e are cross-sectional views illustrating the changes in the condition of the raw material 13 in the vicinity of the opening 3. Fig. 4a shows the condition prior to the injection of the raw material; Fig. 4b shows the condition after injection of the raw material; Fig. 4c shows the condition wherein the compression tool 11 having its wedge-shaped protrusion is lowered onto the opening 3; Fig. 4d shows the condition after the compression tool 11 has been raised; and Fig. 4e shows the condition wherein the raw material 13 has been solidified by heating. As the raw material is heated and solidifies, it expands to form the swollen meat protrusions 14.

According to this invention, however, the compression tool 11 presses down on only a part of the back of the product, and, as shown in Fig. 5, the swollen meat protrusions 14 of the shrimp-shaped processed food product 15 are not formed at any other parts even after heating.

Fig. 6 shows another embodiment of the invention. Although the cavity 22 and the protrusion 23 are the same as the corresponding cavity 2 and protrusion 5 in Fig. 1, the flat surfaces 21′ of the mold 21 extends only around the cavity 22 and the outer peripheries of the mold 21. With the exception of the cavity 22, the parts 28 enclosed by the flat surfaces 21′ form hollow or concave areas. The protrusion 23 also has a flat surface 23′ in the same plane as the flat surface 21′ of the mold 21. An arcuate wedge-shaped protrusion 25 is formed on the cover mold 24. The difference between the cover mold 24 and the cover mold 6 is that the protrusion 25 is formed on the cover mold 24 instead of on a separate piece. The shape of the protrusion 25 is the same as that of the protrusion 12 of the compression tool 11. The raw material supply mold 26 and the raw material supply channel 27 are the same as the corresponding components in Fig. 1.

With this embodiment, after the raw material is injected into the cavity, when the cover mold 24 is pulled away from the mold, the impression of the wedge-shaped protrusion 25 remains on the raw material with which the cavity has been filled. This condition is similar to that shown in Fig. 4d, and heating produces the condition shown in Fig. 4e. After the raw material is injected into the mold, it is also possible to perform the heating process without pulling away the cover mold 24. When the cover mold 24 is pulled away from the mold, although not shown in the drawings, an appropriate moistening means can be used to facilitate the separation of the cover mold.

Fig. 7 shows yet another embodiment of the invention. Although the cavity 32 and the protrusion 33 are the same as the corresponding cavity 2 and protrusion 5 in Fig. 1, the flat surface 31′ of the mold 31 extends only around the cavity 32 and the outer peripheries of the mold 31 as in Fig. 6. With the exception of the cavity 32, the parts 37 enclosed by the flat surface 31′ form concave areas. The protrusion 33 also has a flat surface 33′ on the same plane as the flat surface 31′ of the mold 31. The difference between Fig. 7 and Fig. 6 is that the cover mold and the raw material supply mold are formed in one piece to become a cover mold 34 for the supply of the raw material. The wedge-shaped protrusion 35 has the same shape as the protrusion 12 of the compression tool 11. The raw material supply channel 36 is the same as the corresponding channel in Fig. 1.

By forming the flat surface 31′, as shown in Figs. 6 and 7, only around the cavity 22 or 32 and the outer peripheries of the mold instead of the entire mating surface of the mold halves, the area of the mating surface is reduced, thus increasing the surface pressure and improving the tightness of the mating of the two mold halves.

With this invention, through a special design for the shape of the mold, a deveined part is formed on only a part of the back of the shrimp, thus providing a shrimp-shaped processed food product which more closely resembles a real shrimp in accordance with recent trends in demand, and the processed food product thus obtained using this invention is extremely well suited for use in appetizers, deep frying, etc.

## Claims

1. Apparatus for producing a shrimp-shaped processed food product, comprising a two-piece split mold having a cavity formed therein in the shape of the shelled meat of the torso of a shrimp and a substantially flat surface around said cavity, and a cover mold, said split mold having a protrusion including a flat surface on substantially the same plane as said flat surface, said flat surface being above said cavity at the neck side of the shrimp torso, the two halves of said two-piece split mold forming when fitted together an approximately circular raw material inlet, a curved opening being formed separately from said raw material inlet, and said cover mold having a curved surface capable of sealing off said curved opening.

2. Apparatus according to Claim 1, wherein said cover mold includes an arcuate protrusion which is adjacent said curved opening for forming a groove in the shrimp torso.

3. Apparatus according to Claim 2, wherein said protrusion is shaped to form a groove only in a short portion of the back of the torso.

4. Apparatus according to Claim 1, and further including a supply mold having a raw material supply channel formed therein, said channel being aligned with said inlet when said supply mold is positioned on said two-piece mold adjacent said protrusion.

5. Apparatus according to Claim 4, wherein said supply mold and said cover mold are formed in one piece.

6. Apparatus according to Claim 1, wherein said protrusion separates and forms a sealed connection between said inlet and said opening.

7. A method for the production of a shrimp-shaped processed food product utilizing a two-piece split mold which has a cavity formed in the shape of the shelled meat of the torso of a shrimp and a flat surface around the cavity, said split mold including a protrusion having a flat surface on substantially the same plane as said flat surface of the mold and being formed above the cavity at the neck side of the shrimp torso, an approximately circular raw material inlet being formed in said mold by fitting together the two halves of the two-piece split mold, and a curved opening being formed in the split mold adjacent to but spaced from said raw material inlet and utilizing a cover mold having a curved surface capable of sealing off the curved opening in said two-piece split mold, a raw material supply mold having a raw material supply channel matching said raw material inlet; and a compression tool having a protrusion with a wedge-shaped cross section, said method comprising the steps of spraying first a mold release agent and then a food coloring agent through the curved opening in said two-piece split mold, lowering said cover mold to seal off the curved opening in said two-piece split mold, aligning the raw material supply channel of the raw material supply mold with the raw material inlet of the two-piece split mold, injecting a raw material using ground fish meat as the main ingredient and having a taste and texture resembling that of shrimp into said cavity, removing the cover mold and raw material supply mold after the cavity has been filled with the raw material, pressing the compression tool down onto the injected raw material to form a groove in the top of the raw material in the opening of the two-piece split mold, heating the mold to solidify the shape of the raw material, and thereafter removing the solidified raw material from the mold.

8. The method set forth in Claim 7, wherein said wedge-shaped cross section forms said groove only in a short portion of the back of the torso.

9. A shrimp-shaped processed food product comprising a torso having a neck end and a tail end, said torso being molded of a raw material including ground fish meat having a taste and texture resembling that of a shrimp, a groove formed along the back of said torso, said groove extending from a point which is spaced from said neck end which is spaced from said tail end, and enlarged parts on both sides of said groove.

FIG_1_

FIG_2_

_FIG_3a_

_FIG_3c_

3c

11

12

3c

12

_FIG_3b_

5

2

1

17

_FIG_5_

14

15

16

EP 0 359 487 A2

FIG_4a

FIG_4b

FIG_4c

FIG_4d

FIG_4e

_FIG_.6_

24

27

26

25

23

23'

22

21'

21

28

_FIG_.7_

36

34

35  33'

33

32

31'

31

37